# EUROPÄISCHE PATENTSCHRIFT

(11) **EP 1 082 278 B1**
(45) Veröffentlichungstag und Bekanntmachung des Hinweises auf die Patenterteilung: **04.06.2003**
(21) Anmeldenummer: 99919048.1
(22) Anmeldetag: 03.03.1999
(51) Int. Cl.: C04B 35/66, B22D 41/54, B32B 18/00

(54) **KERAMISCHER VERBUNDKÖRPER**
CERAMIC COMPOSITE BODY
CORPS COMPOSITE EN CERAMIQUE

(30) Priorität: 05.05.1998 DE 19819905; 10.12.1998 DE 29823385 U
(43) Veröffentlichungstag der Anmeldung: 14.03.2001
(73) Patentinhaber: DIDIER-WERKE AG, 65189 Wiesbaden (DE)
(72) Erfinder: HÖLLER, Wolfram, D-65343 Eltville (DE); GRONEBAUM, Rudolf, Herrmann, D-38259 Salzgitter (DE); GEBER, Horst, D-55435 Gau-Algesheim (DE); LEE, Steve, Cardross 9825 SLS (GB); GALLE, Erich, D-65599 Dornburg (DE); VOLKAN, Haneti, D-65451 Kelsterbach (DE); GRIMM, Daniel, D-65307 Bad Schwalbach (DE); SCHMID, Thomas, D-65346 Eltville (DE)
(74) Vertreter: Becker, Thomas, Dr., Dipl.-Ing.
(86) Internationale Anmeldenummer: DE9900627
(87) Internationale Veröffentlichungsnummer: WO99057077

(56) Entgegenhaltungen:
- DE-A- 19 727 649
- DE-C- 3 523 420
- DATABASE WPI Week 8725 Derwent Publications Ltd., London, GB; AN 87-173742 XP002108934 & JP 62 104654 A (SUMITOMO CHEMICAL IND.), 15. Mai 1987 (1987-05-15)

## Beschreibung

Die Erfindung betrifft einen keramischen Verbundkörper, insbesondere zur Verwendung in der Sekundärmetallurgie.

Es sind zahlreiche feuerfeste keramische Bauteile bekannt, die in der Sekundännetallurgie eingesetzt werden und beispielsweise der Aufnahme oder Durchleitung metallurgischer Schmelzen dienen. Hierzu gehören Ausgußhülsen, Eintauchausgüsse, Monoblocstopfen, Verteilerhülsen und dergleichen.

Von diesen feuerfesten Produkten wird eine hohe Erosionsund Korrosionsbeständigkeit, eine gute TemperaturWechselbeständigkeit und eine hohe Standzeit verlangt.

Je nach Anwendungsfall finden unterschiedlichste keramische Werkstoffe Anwendung. Beispielsweise Tauchrohre der genannten Art bestehen heutzutage üblicherweise aus Al₂O_{3⁻}Graphit-Werkstoffen.

In diesem Zusammenhang ist es bekannt, daß beim Vergießen bestimmter Stahlsorten, beispielsweise sogenannter ULC (ultra low carbon) Stähle Kohlenstoff aus dem Feuerfestmaterial vom flüssigen Stahl aufgenommen wird und es zu einer Ansatzbildung von Aluminiumoxid im Kontaktbereich Stahl/Feuerfestmaterial kommt. Diese Ansatzbildung, auch "clogging" genannt, kann zum Beispiel bei niedriggekohlten, Al-beruhigten Stählen ein ernsthaftes Problem darstellen. Anhaftendes Aluminiumoxid am etwas kühleren Feuerfestmaterial kann einen Eintauchausguß nach einer gewissen Zeitdauer so zusetzen, daß es zu einer Gießunterbrechung kommt.

Diese Phänomene sind in der Literatur umfangreich beschrieben (J. Poirier in New Submerged Nozzles to reduce Alumina build up in continuous casting, Seiten 79-86).

Im Ergebnis wird festgestellt, daß kohlenstofffreie feuerfeste Werkstoffe die genannte Ansatzbildung von Aluminiumoxid besser verhindern können als konventionelle feuerfeste Werkstoffe auf Basis Al₂O₃-Graphit.

Die US 5,370,370 beschreibt ein feuerfestes Formteil, dessen eine Seite aus einem kohlenstoffgebundenen feuerfesten oxidischen Material besteht und dessen andere Seite eine kohlenstofffreie, oxidierte Zone aufweist, die mit einem kohlenstofffreien feuerfesten Material infiltriert ist.

Zur Herstellung wird zunächst ein kohlenstoffhaltiges feuerfestes Material zum Beispiel zu einem Tauchausguß geformt. Die äußere Oberfläche wird anschließend glasiert. Danach wird der Tauchausguß in oxidierender

Atmosphäre gebrannt. Auf der nicht glasierten Seite kommt es dabei zu einem Ausbrand des Kohlenstoffs, der durch Einstellung der Brenndauer über eine gewisse Eindringtiefe, beispielsweise 2-3 mm, beschränkt wird. Diese "oxidierte Zone" wird anschließend mit dem kohlenstofffreien Feuerfestmaterial infiltriert.

Ein solcher Tauchausguß hat den Vorteil, im Kontaktbereich zur Metallschmelze (innen) eine Schicht aus einem kohlenstofffreien Werkstoff zu besitzen, der eine Ansatzbildung der Metallschmelze weitestgehend verhindert. Die Herstellung eines solchen Formteils ist jedoch - wi.e dargestellt - extrem aufwendig.

In der WO 95/34395 wird ein für den Stahlguß verwendbares Feuerfestteil vorgeschlagen, welches durchgehend kohlenstoffhaltig ist. Um gleichwohl die genannte Ansatzbildung zu verhindern wird vorgeschlagen, das Formteil als Verbundkörper auszubilden, und zwar mit einer der Metallschmelze benachbarten Schicht, die bei Temperaturen über 1000°C gasdicht wird. Dazu wird vorgeschlagen, dieser Schicht entsprechende Sinterhilfsmittel zuzumischen und zwar in feinteiliger Form (< 50 µm).

Der Kohlenstoffgehalt dieser Schicht soll mit 4-9 Gew.-% zwar deutlich geringer sein als der Kohlenstoffgehalt der benachbarten Schicht (der mit 20-30 Gew.-% angegeben wird). Allein dieses Merkmal reduziert die Gefahr einer Ansatzbildung jedoch nicht, weshalb dem weiteren Merkmal eine wesentliche Bedeutung zukommt, nämlich die entsprechende Schicht im Betrieb gasdicht versintern zu lassen. Daraus folgt gleichzeitig eine erhebliche betriebliche Unsicherheit, da die dichte Schicht erst beim Gießen ausgebildet werden soll.

In der DE 35 23 420 C1 wird ein Verfahren beschrieben, bei dem ein Schlicker in die durch einen Grundkörper gebildete Hohlform gegossen wird. Im Kontakt des Schlickers mit dem porösen saugenden Grundkörper bildet sich auf dessen Oberfläche ein Scherben nach dem Hohlgußverfahren.

Der feuerfeste Verbundkörper nach DE 197 27 649 A1 weist zwei gemeinsam gepreßte Schichten auf.

Der Erfindung liegt insoweit die Aufgabe zugrunde, ein keramisches Bauteil zur Verfügung zu stellen, welches geeignet ist, die genannte Ansatzbildung möglichst zuverlässig zu verhindern, welches in einem einfachen Verfahren herstellbar ist und welches eine möglichst gute Erosions- und Korrosionsbeständigkeit sowie Temperaturwechselbeständigkeit zeigt.

Es wurde erkannt, daß sich kohlenstoffhaltige und kohlenstofffreie feuerfeste keramische Werkstoffe in einem gemeinsamen Herstellungsverfahren zu einem auch unter Temperaturlast und -wechseln rißfreien keramischen Verbundkörper verarbeiten lassen, wenn die C-haltige erste Schicht gepreßt und die C-freie zweite Schicht als monolithische Schicht auf die gepreßte Schicht aufgetragen wird.

Insoweit betrifft die Erfindung in ihrer allgemeinsten Ausführungsform einen keramischen Verbundkörper, der zu einem keramischen feuerfesten Verbundkörper härtbar, temperbar und/oder brennbar ist aus mindestens:
- einer ersten Schicht mit einem kohlenstoffhaltigen, oxidischen feuerfesten Werkstoff und
- einer auf die erste Schicht aufgetragenen zweiten Schicht mit einem, mit einem Bindemittel gebundenen kohlenstofffreien oxidischen feuerfesten Werkstoff, wobei
- die kohlenstoffhaltige erste Schicht aus einem Pressteil und
- die kohlenstofffreie zweite Schicht aus einer monolithischen Gieß- oder Schmiermasse besteht.

Der gepresste Teil kann auch bereits vorgebrannt sein, bevor er mit der monolithischen Schicht kombiniert wird.

Die oxidischen feuerfesten Werkstoffe der Schichten bilden den Hauptbestandteil der-Schichten. Ihr Anteil beträgt in der Regel jeweils mindestens > 50 Gew.-% der Gesamtmasse jeder Schicht. Die weiteren Bestandteile umfassen beispielsweise verschiedene feuerfeste Nitride, Bindemittel oder andere Zusatzstoffe sowie bei der ersten Schicht Kohlenstoff.

Zum Beispiel zur Herstellung eines Eintauchausgusses läßt sich der keramische Verbundkörper wie folgt herstellen:
In einer isostatischen Presse wird zwischen einem mittigen Stahldorn und einer äußeren Gummihülse ein kohlenstoffhaltiger, feuerfester Werkstoff mit oxidischem Matrixmaterial als Hauptkomponente verpreßt (erste Schicht). Der Preßteil wird herausgenommen und auf einen Dorn gesetzt, und zwar unter Ausbildung eines Ringspaltes zwischen Dorn und erstem Preßteil. Anschließend wird der Ringspalt mit der Masse für die zweite, C-freie Schicht vergossen und nach Erreichen einer Grünstandsfestigkeit der Dorn abgezogen.

Der Verbundkörper kann danach gehärtet (bei circa 150-250°C), getempert (bei 250-600°C) und/oder gebrannt (> 600° C) werden. Ein solcher feuerfester keramischer Verbundkörper wurde in einem Induktionsofen unter Verwendung eines Stahls der Sorte ST 37 getestet, wobei zweimal 1,5 Gew.-% Aluminium-Metall zugegeben wurden, um einen sogenannten "clogging Test" zu simulieren.

Im Bereich der kohlenstofffreien zweiten Schicht konnte keine Ansatzbildung von Aluminiumoxid festgestellt werden. Eine Rißbildung zwischen und in den Schichten trat nicht auf.

Alternativ kann der Innenraum des ersten, gepreßten Teils des Verbundkörpers auch vollständig mit der C-freien Masse ausgegossen oder ausgeschmiert und anschließend auf die gewünschte Wandstärke ausgebohrt oder sonstwie mechanisch abgetragen werden.

Als Werkstoff für die erste Schicht können prinzipiell alle Werkstoffe Anwendung finden, aus denen sich kohlenstoffhaltige Erzeugnisse herstellen lassen, beispielsweise Al₂O_{3,} ZrO₂, SiO₂, MgO einzeln oder in Kombination, wobei der Kohlenstoffanteil üblicherweise als Graphit zwischen 10 und 40 Gew.-%, bezogen auf die Gesamtmasse der ersten Schicht, beträgt.

Als feuerfesten Werkstoff für die zweite Schicht kommen ebenso verschiedenste konventionelle feuerfeste Materialien in Frage, überwiegend auf Basis ZrO₂, Mullit, Zirkonmullit, kalzinierte Tonerde, Korund, Nitride wie Siliciumnitrid, einzeln oder in Kombination.

Für die zweite, kohlenstofffreie Schicht ist es zur Erzielung einer ausreichenden Grünstandsfestigkeit notwendig, bis zum Einsetzen einer keramischen Bindung die feuerfesten Teilchen mit Hilfe eines Bindemittels zu stabilisieren. Als geeignete Bindemittel haben sich unter anderem phosphathaltige Materialien wie Phosphorsäure oder Monoaluminiumphosphat, Tonschlicker, Glykol, Sulfitablauge, feuerfester Zement, Wasserglas, SiO₂-Gel, SiO₂-Sol oder Kunstharz, einzeln oder in Mischung herausgestellt.

Soweit ein Kunstharz als Bindemittel Anwendung findet, enthält dieses zwar Kohlenstoff; das Kunstharz-Bindemittel wird jedoch zum einen in sehr geringen Mengen (0,5 bis maximal 2 Gew.-%, bezogen auf die Gesamtmasse der zweiten Schicht) eingesetzt und der Kohlenstoff vercrackt im übrigen bei der anschließenden Temperung, so daß keine negativen Einflüsse des ursprünglich Kohlenstoff enthaltenden Kunstharzes hinsichtlich der zu vermeidenden Ansatzbildung festgestellt werden konnten. Etwaige geringe C-Reste würden außerdem beim Vorheizen des Verbundkörpers ausbrennen. Ein C-Gehalt, der über das Bindemittel in den Versatz für die zweite Schicht eingebracht wird, wäre jedoch in jedem Fall auf < 2 Gew.-% zu beschränken.

Erfindungsgemäß wird die zweite Schicht, die keinen Anteil an elementarem C-Zusatz (wie Graphit, Ruß, Koks) hat, und allenfalls einen über das Bindemittel eingebrachten C-Gehalt von maximal 2 Gew.-% aufweist, als kohlenstofffrei bezeichnet.

Typische Anteile der genannten Bindemittel (in Gew.-%, jeweils bezogen auf die Gesamtmasse der zweiten Schicht) sind:
- für das phosphathaltige Material: 3-7
- für den Tonschlicker: 10-17
- für Glykol: 5-10
- für Sulfitablauge: 5-10
- für SiO₂-Sol bzw. SiO₂-Gel: 3-7
- für Wasserglas: 1-5
- für Kunstharz: 0,5-2
- für feuerfesten Zement, z.B. Calciumaluminat-Zement: 1-10.

Ein typischer Versatz für die zweite Schicht enthält als feuerfesten Werkstoff 50-60 Gew.-% Al₂O₃, 20-30 Gew.-% SiO₂, 15-25 Gew.-5 ZrO₂ sowie bis zu 9 Gew.-% CaO, P₂O₅, Na₂O und K₂O, einzeln oder in Kombination.

Die Abplatzsicherheit des Verbundkörpers kann erhöht und die Gefahr einer Rißbildung vermieden werden, wenn die Werkstoffauswahl der Schichten so erfolgt, daβ die C-haltige Schicht einen geringeren Wärmeausdehnungskoeffizienten aufweist als die C-freie Schicht. Eine C-freie Innenschicht drückt sich so gegen eine C-haltige, per se "elastischere" Außenschicht.

Die Ausdehnungskoeffizienten können dabei um bis zu 0,2 Prozentpunkte (absolut) variieren. Vor allem wird die Abplatzgefahr durch eine spezifische Abstimmung der jeweiligen Schichtdicken gesteuert. Dazu wird vorgeschlagen, das Verhältnis der Wandstärken der ersten Schicht zur zweiten Schicht ≥ 1,5 : 1, nach einer Ausführungsform > 2 : 1 einzustellen.

Bei einem bevorzugt induktiven Aufheizen des Verbundkörpers dehnt sich zunächst die C-haltige Außenschicht aus. Durch Wärmeleitung wird die C-freie Innenschicht von der Außenschicht erwärmt und dehnt sich in die ausgedehnte Außenschicht aus. Dabei kann die Außenschicht während der gesamten Einsatzzeit des Verbundkörpers auf der Temperatur einer zugehörigen Schmelze oder einer höheren Temperatur gehalten werden, bei der eine Dehnbarkeit, Duktilität beziehungsweise Gefügeelastizität der Außenschicht gegeben ist. Dadurch läßt sich die aufgeheizte Außenschicht durch die sich ausdehnende Innenschicht plastisch verformen. Es kann so eine Rißbildung in der Außenschicht vermieden werden. Die Ausdehnungskoeffizienten können bei diesem Aufheizverfahren um bis zu 0,5 Prozentpunkte (absolut) variieren. In der Abstimmung der jeweiligen Schichtdicken kann das Dickenverhältnis der ersten zur zweiten Schicht je nach Differenz der Ausdehnungskoeffizienten reduziert werden.

Wie ausgeführt lassen sich die genannten Verbundkörper insbesondere im Bereich der Sekundärmetallurgie und zum Vergießen aggressiver Stähle einsetzen. Sie können demnach beispielsweise als Eintauchausguß konfektioniert sein, bei dem die erste C-haltige Schicht außen und die zweite C-freie Schicht innen verläuft.

Eine andere Konfektionierung führt zu einem Monoblocstopfen oder einer Monoblocstopfenkappe, bei dem/der die erste Schicht innen und die zweite Schicht außen verläuft.

Der Verbundkörper kann auch als Verteilerhülse oder Schattenrohr konfektioniert sein, bei dem wiederum die erste Schicht außen und die zweite Schicht innen verläuft.

Der Verbundkörper weist günstige Erosions- und Korrosionsbeständigkeit auf und erschließt damit auch Anwendungen im Horizontalstrangguß und als Abstichhülse eines Schmelzgefäßes.

## Patentansprüche

1. Verbundkörper, der zu einem keramischen feuerfesten Verbundkörper härtbar, temperbar und/oder brennbar ist, aus mindestens
a) einer ersten Schicht mit einem kohlenstoffhaltigen, oxidischen feuerfesten Werkstoff und
b) einer auf die-erste Schicht aufgetragenen zweiten Schicht mit einem, mit einem Bindemittel gebundenen kohlenstofffreien oxidischen feuerfesten Werkstoff, wobei
c) die kohlenstoffhaltige erste Schicht aus einem Preßteil und
d) die kohlenstofffreie zweite Schicht aus einer monolithischen Gieß- oder Schmiermasse besteht.

2. Verbundkörper nach Anspruch 1, bei dem die erste, kohlenstoffhaltige Schicht eine isostatisch verpreßte Schicht ist.

3. Verbundkörper nach Anspruch 1, bei dem das Verhältnis der Wandstärken der ersten Schicht zur zweiten Schicht ≥ 1,5 : 1 beträgt.

4. Verbundkörper nach Anspruch 1, bei dem die zweite, kohlenstofffreie Schicht aus einem Werkstoff besteht, dessen Wärmeausdehnungskoeffizient größer als der der ersten, kohlenstoffhaltigen Schicht ist.

5. Verbundkörper nach Anspruch 1, bei dem die erste Schicht ≥ 5 Gew.-% Al₂O₃, ZrO₂, SiO₂, MgO einzeln oder in Kombination sowie 10 bis 40 Gew.-% Kohlenstoff, insbesondere in Form von Graphit, neben nicht oxidischen feuerfesten Komponenten bis zu 25 Gew.-% enthält.

6. Verbundkörper nach Anspruch 1, bei dem das Bindemittel der zweiten Schicht aus einem phosphathaltigen Material wie Phosphorsäure oder Monoalumiuniumphosphat, einem Tonschlicker, Glykol, Sulfitablauge, feuerfestem Zement, Wasserglas, SiO₂-Gel, SiO₂-Sol oder einem Kunstharz einzeln oder in Mischung besteht.

7. Verbundkörper nach Anspruch 6, mit folgenden Anteilen (in Gew.-%) des Bindemittels, jeweils bezogen auf die Gesamtmasse für die zweite Schicht:
- Phosphathaltiges Material: 3-7
- Tonschlicker: 10-17
- Glykol: 5-10
- Sulfitablauge: 5-10
- SiO₂-Sol und/oder SiO₂-Gel: 3-7
- Wasserglas: 1-5
- Kunstharz: 0,5-2
- feuerfester Zement: 1-10.

8. Verbundkörper nach Anspruch 1, bei dem der feuerfeste Werkstoff der zweiten Schicht überwiegend aus ZrO₂, Mullit, Zirkonmullit, kalzinierter Tonerde, Korund oder Nitriden, einzeln oder in Kombination besteht.

9. Verbundkörper nach Anspruch 1, bei dem der feuerfeste Werkstoff der zweiten Schicht 50-60 Gew.-% Al₂O₃, 20-30 Gew.-% SiO₂, 15-25 Gew.-% ZrO₂ sowie bis zu 9 Gew.-% CaO, P₂O₅, Ma₂O und K₂O, einzeln oder in Kombination enthält.

10. Verbundkörper nach Anspruch 1, bei dem der feuerfeste Werkstoff für die zweite Schicht bis zu 5 Gew.-% Bornitrid und Siliciumnitrid, einzeln oder in Kombination enthält.

11. Verbundkörper nach Anspruch 1, bei dem die erste, kohlenstoffhaltige Schicht aus einem Werkstoff besteht, der bei hohen Temperaturen, insbesondere bei Temperaturen > 1.000° C, plastische Verformung zeigt.

12. Verbundkörper nach Anspruch 11, bei dem der Werkstoff für die erste, kohlenstoffhaltige Schicht bis zu 3 Gew.-% Flußmittel enthält.

13. Verbundkörper nach Anspruch 1, bei dem die erste, kohlenstoffhaltige Schicht zu > 50 Gew.-% aus oxidischen feuerfesten Materialien und die zweite, kohlenstofffreie Schicht zu > 80 Gew.-% aus oxidischen, feuerfesten Materialien besteht.

14. Verbundkörper nach Anspruch 1, konfektioniert als Verteilerhülse, Schattenrohr, Abstichhülse eines Schmelzgefäßes oder Eintauchausguß, wobei die erste, kohlenstoffhaltige Schicht außen und die zweite, kohlenstofffreie Schicht innen verläuft.

15. Verbundkörper nach Anspruch 1, konfektioniert als = Monoblocstopfen oder Monoblocstopfenkappe, bei dem/der die erste, kohlenstoffhaltige Schicht innen und die zweite, kohlenstofffreie Schicht außen verläuft.

16. Verbundkörper nach Anspruch 1, bei dem eine erste äußere und eine zweite innere Schicht werkstoffmäßig so eingestellt sind, daß sich die erste, C-haltige Schicht bei induktiver Erwärmung ausdehnt und die von der ersten Schicht durch Wärmeleitung von dieser ersten Schicht erwärmte zweite Schicht in die ausgedehnte erste Schicht ausdehnt.

17. Verbundkörper nach Anspruch 1, dessen Preßteil vorgebrannt ist.

18. Keramischer feuerfester Verbundkörper, der aus einem Verbundkörper nach einem der Ansprüche 1 bis 17 bei 150-250°C gehärtet und/oder bei 250-600°C getempert und/oder bei über 600°C gebrannt worden ist.

## Claims

1. A composite body, which may be hardened, tempered and/or fired to provide a ceramic refractory composite body, comprising at least:
a) a first layer with a carbon-containing, oxide refractory material and,
b) a second layer, applied onto said first layer, with a carbon free oxide refractory material bonded by a binding agent, wherein
c) the carbon-containing first layer is compression molded and
d) the carbon free second layer is a monolithic castable or lubricating mass.

2. A composite body according to claim 1, in which the first, carbon-containing layer is isostatically press molded.

3. A composite body according to claim 1, in which the ratio of wall thickness between the first and second layer equals ≥ 1.5 : 1.

4. A composite body according to claim 1, in which the second, carbon free layer consists of a material whose heat expansion coefficient exceeds that of the first, carbon-containing layer.

5. A composite body according to claim 1, in which the first layer contains ≥ 50%w/w of Al₂O₃, ZrO₂, SiO₂ and MgO individually or in combination, along with 10 to 40%w/w of carbon, in particular in the form of graphite, in addition to up to 25%w/w of non-oxide refractory components.

6. A composite body according to claim 1, in which the binding agent of the second layer consists of a phosphate-containing material like phosphoric acid of monoaluminum phosphate, a clay slip, glycol, sulfite liquor, refractory cement, water glass, SiO₂ gel, SiO₂ sol or synthetic resin, individually or in mixture.

7. A composite body according to claim 6, with the following shares (in %w/w) of the binding agent, each relative to the total mass for the second layer:
- the phosphate-containing material: 3-7
- the clay slip: 10-17
- glycol: 5-10
- sulfite liquor: 5-10
- SiO₂ sol or SiO₂ gel: 3-7
- water glass: 1-5
- synthetic resin: 0,5-2
- refractory cement: 1-10

8. A composite body according to claim 1, in which the refractory material of the second layer, comprises primarily ZrO₂, mullite, zirconium mullite, calcined alumina, corundum or nitrides, individually or in combination.

9. A composite body according to claim 1, in which the refractory material of the second layer comprises 50-60%w/w of Al₂O₃, 20-30%w/w of SiO₂, 15-25%w/w of ZrO₂ as well as up to 9%w/w of CaO, P₂O₅, Na₂O and K₂O, individually or in combination.

10. A composite body according to claim 1, in which the refractory material of the second layer contains up to 5%w/w of boron nitride and silicon nitride, individually or in combination.

11. A composite body according to claim 1, in which the first, carbon-containing layer is made of a material that exhibits plastic deformation at high temperatures, in particular at temperatures > 1,000°C

12. A composite body according to claim 11, in which the material for the first, carbon-containing layer contains up to 3%w/w of a flux.

13. A composite body according to claim 1, in which the first, carbon-containing layer consists of > 50%w/w of oxide refractory materials, and the second, carbon free layer consists of > 80%w/w oxide, refractory materials.

14. A composite body according to claim 1, fabricated as a distribution sleeve, shadow pipe, tapping sleeve of a melting vessel or submerged nozzle, in which the first carbon-containing layer is outside, and the second, carbon free layer is inside.

15. A composite body according to claim 1, fabricated as a monobloc stopper or a monobloc stopper cap, in which the first, carbon-containing layer runs inside, and the second, carbon free layer runs outside

16. A composite body according to claim 1, in which a first outside and second inside layer are adjusted in such a way that the first, carbon-containing layer expands during inductive heating, and the second layer warmed by this first layer as the result of heat conduction from the first layer expands into the expanded first layer.

17. A composite body according to claim 1, the press molded part of which is prefired.

18. Ceramic refractory composite body, made of a composite body of one of claims 1 to 17 after hardening at 150-250°C and/or tempering at 250-600°C and/or firing at > 600°C.

## Revendications

1. Elément composite pouvant être durci, attrempé et/ou cuit pour donner un élément composite en céramique réfractaire, comprenant au moins
a) une première couche avec un matériau réfractaire oxydique contenant du carbone, et
b) une deuxième couche, déposée sur la première couche, avec un matériau réfractaire oxydique exempt de carbone et lié au moyen d'un liant, dans lequel
c) la première couche contenant du carbone se compose d'une pièce moulée par compression, et
d) la deuxième couche exempte de carbone se compose d'une masse coulable ou lubrifiante monolithique.

2. Elément composite selon la revendication 1, dans lequel la première couche contenant du carbone est une couche obtenue par compression isostatique.

3. Elément composite selon la revendication 1, dans lequel le rapport de l'épaisseur de paroi de la première couche sur celle de la deuxième couche est ≥ 1,5 : 1.

4. Elément composite selon la revendication 1, dans lequel la deuxième couche exempte de carbone se compose d'un matériau dont le coefficient de dilatation thermique est supérieur à celui de la première couche contenant du carbone.

5. Elément composite selon la revendication 1, dans lequel la première couche contient ≥ 50% en poids d'Al₂O₃, ZrO₂, SiO₂, MgO, seuls ou en combinaison, ainsi que 10 à 40 % en poids de carbone, en particulier sous la forme de graphite, en plus de composants réfractaires non oxydiques jusqu'à 25 % en poids.

6. Elément composite selon la revendication 1, dans lequel le liant de la deuxième couche se compose d'un matériau contenant du phosphate, par exemple de l'acide phosphorique ou du phosphate de monoaluminium, d'une barbotine d'argile, de glycol, d'une lessive de sulfite résiduelle, d'un ciment réfractaire, de verre soluble, d'un gel de SiO₂, d'un sol de SiO₂ ou d'une résine synthétique, seuls ou sous forme de mélange.

7. Elément composite selon la revendication 6, avec les proportions de liant suivantes (en % en poids), ramenées respectivement à la masse totale de la deuxième couche :
- Matériau contenant du phosphate : 3 à 7,
- Barbotine d'argile : 10 à 17,
- Glycol : 5 à 10,
- Lessive de sulfite résiduel : 5 à 10,
- Sol de SiO₂ et/ou gel de SiO₂ : 3 à 7,
- Verre soluble : 1 à 5,
- Résine synthétique : 0,5 à 2,
- Ciment réfractaire : 1 à 10.

8. Élément composite selon la revendication 1, dans lequel le matériau réfractaire de la deuxième couche se compose majoritairement de ZrO₂, de mullite, de mullite de zircone, d'alumine calcinée, de corindon ou de nitrures, seuls ou en combinaison.

9. Elément composite selon la revendication 1, dans lequel le matériau réfractaire de la deuxième couche se compose de 50 à 60 % en poids d'Al₂O₃, de 20 à 30 % en poids de SiO₂, de 15 à 25% en poids de ZrO₂ ainsi que de jusqu'à 9 % en poids de CaO, Na₂O et K₂O, P₂O₅ seuls ou en combinaison.

10. Elément composite selon la revendication 1, dans lequel le matériau réfractaire de la deuxième couche contient jusqu'à 5% en poids de nitrure de bore et de nitrure de silicium, seuls ou en combinaison.

11. Elément composite selon la revendication 1, dans lequel la première couche contenant du carbone se compose d'un matériau qui présente une déformation plastique aux températures élevées, en particulier à des températures > 1000°C.

12. Elément composite selon la revendication 11, dans lequel le matériau de la première couche contenant du carbone contient jusqu'à 3 % en poids de fondant.

13. Elément composite selon la revendication 1, dans lequel la première couche contenant du carbone se compose à > 50% en poids de matériaux réfractaires oxydiques et la deuxième couche exempte de carbone se compose à > 80 % en poids de matériaux réfractaires oxydiques.

14. Elément composite selon la revendication 1, confectionné sous la forme d'une douille de diffuseur, d'un tube à masque d'ombre, d'une douille de piquée d'un récipient de fusion ou de coulée par immersion, dans lequel la première couche contenant du carbone s'étend à l'extérieur et la deuxième couche exempte de carbone s'étend à l'intérieur.

15. Elément composite selon la revendication 1, confectionné sous la forme d'un bouchon monobloc ou d'un capuchon de bouchon monobloc, dans lequel la première couche contenant du carbone s'étend à l'intérieur et la deuxième couche exempte de carbone s'étend à l'extérieur.

16. Elément composite selon la revendication 1, dans lequel une première couche externe et une deuxième couche interne sont ajustées du point de vue des matériaux de façon que la première couche contenant du carbone se dilate sous l'action d'un chauffage inductif et que la deuxième couche chauffée par la première couche par la conduction thermique de cette première couche se dilate dans la première couche dilatée.

17. Elément composite selon la revendication 1, dont la pièce moulée par compression est précuite.

18. Elément composite en céramique réfractaire qui a été durci à 150-250°C et/ou attrempé à 250-600°C et/ou cuit à une température supérieure à 600°C à partir d'un élément composite selon l'une quelconque des revendications 1 à 17.
